# EUROPÄISCHE PATENTSCHRIFT

(11) **EP 2 603 368 B1**
(45) Veröffentlichungstag und Bekanntmachung des Hinweises auf die Patenterteilung: **31.03.2021**
(21) Anmeldenummer: 11784927.3
(22) Anmeldetag: 15.08.2011
(51) Int. Cl.: B29C 44/34, B29C 44/58, B29C 33/40, B29C 33/56

(54) **VERFAHREN ZUM HERSTELLEN VON SCHÄUMFORMTEILE**
METHOD FOR PRODUCING FOAM-MOLDED PARTS
PROCÉDÉ DE FABRICATION D'ÉLÉMENTS ALVÉOLAIRES MOULÉS

(30) Priorität: 03.12.2010 DE 102010053228; 13.08.2010 DE 102010034366
(43) Veröffentlichungstag der Anmeldung: 19.06.2013
(73) Patentinhaber: Wiesmayer, Otto, 93333 Neustadt/Donau (DE)
(72) Erfinder: Wiesmayer, Otto, 93333 Neustadt/Donau (DE)
(74) Vertreter: Farago-Schauer, Peter Andreas
(86) Internationale Anmeldenummer: PCT/DE2011/001589
(87) Internationale Veröffentlichungsnummer: WO 2012/025094

(56) Entgegenhaltungen:
- EP-A1- 1 190 828
- EP-A2- 1 566 253
- FR-A1- 2 166 222
- GB-A- 1 243 225
- US-A- 2 734 227
- US-A- 3 464 872
- US-A1- 2004 134 588
- US-A1- 2006 198 921

## Beschreibung

Die Erfindung betrifft ein Verfahren zum Herstellen eines Schäumformteils.

Beim Herstellen von Schäumteilen werden unter anderem Lacke eingesetzt, um eine geschlossene Oberfläche der Schäumteile zu erreichen. Diese Lacke werden auch als Coatings bezeichnet. Hierbei wird in das offene Schaumformunterteil ein Lack meist aus Polyurethan (PU) eingebracht. Anschließend wird eingeschäumt und das Schäumwerkzeug geschlossen. Das Schaumsystem verbindet sich homogen mit dem Lack und das Teil wird dann nach der Aushärtezeit entformt. Der Lack verbindet sich bei einer herkömmlichen Herstellung der Teile mit dem Schaumformwerkzeug und das Schäumwerkzeug muss aus diesem Grund vor dem Schäumprozess mit einem Trennmittel versehen werden.

Das kann je nach Ausführung des Schäumteils nur im Schäumwerkzeugunterteil geschehen oder auch beidseitig, also im Schäumformunterteil und Schäumformoberteil. Das Trennmittel verursacht an der Oberfläche der fertigen Schäumteile Qualitätseinbußen beispielsweise in Form von Schlieren, Glanzunterschiede, Trennmitteleinschlüsse oder Ähnlichem.

Nach einer relativ geringen Stückzahl muss das Trennmittel, welches sich bei jedem Zyklus in dem Schaumwerkzeug aufgebaut hat, durch ein Reinigen entfernt werden. Dies verursacht hohen Ausschuss und erhebliche Kosten.

Ähnliches gilt bei Fahrzeugkomponenten wie beispielsweise Armauflagen, welche meist aus einem Kunststoffinlay oder -träger hergestellt sind und welche in einem definierten Bereich mit einem Schaum verbunden werden. Dabei werden meist in einer Frontschäumform Schaumkomponenten durch eine Kavität im Unterteil erzeugt, wobei die Frontschäumform größtenteils aus Aluminium besteht.

Weiterhin kann der Kunststoffträger dadurch hergestellt werden, dass das Kunststoffinlay oder der Kunststoffträger im Oberteil des Schäumwerkzeuges fixiert ist und Oberteil und Unterteil geschlossen werden, wobei das Schaumsystem vorab in das Unterteil eingebracht wurde. Das Schäumsystem füllt den durch das Schließen des Unter- und Oberteils entstehenden Hohlraum zwischen dem Schäumwerkzeugunterteil und der Trägeroberfläche des Kunststoffinlays oder des Kunststoffträgers aus. Dabei verbindet sich das Schaumsystem homogen mit dem Kunststoffinlay oder dem Kunststoffträger.

Das so entstandene Bauteil wird später meist kaschiert. Beim Kaschieren wird beispielsweise eine Folie oder auch ein Leder über den Schaumbereich des Bauteils gespannt und mit dem Bauteil verbunden, zum Beispiel durch Vernähen.

Die Qualität der zuvor beschriebenen Bauteile hängt entscheidend von einem nicht sichtbaren Übergang zwischen dem Kunststoffträger und dem flexiblen Schaum nach dem Kaschieren ab.

Weiterhin haben Schaumsysteme die Eigenschaft, durch ihr Expansionsverhalten selbst kleinste Spalte zwischen Träger und Schaumform auch bei einer Größe kleiner als 0,05 mm zu durchdringen. Dieses Verhalten wird als "Überschäumung" bezeichnet. Diese Überschäumung muss nach dem Herstellen manuell oder mit Hilfe von Roboter-unterstützten Schleifwerkzeugen oder Bürsten entfernt werden.

Um dieses Überschäumen zu vermindern, wird das Kunststoffinlay oder der Kunststoffträger möglichst definiert mit dem Schäumwerkzeugunterteil in Kontakt gebracht. Dieses Inkontaktbringen wird als tuschieren bezeichnet. Jedoch durch Fertigungstolleranzen beim Kunststoffinlay oder beim Kunststoffträger führt dieser Kontakt nicht zu einer abgedichteten Kavität, sodass häufig weiterhin ein Überschäumen erfolgt

Ein Beispiel für das Formen eines gehäuteten Formschaumteils gemäß dem kennzeichnenden Teil des Anspruchs 1 ist in Dokument GB 1 243 225 A veröffentlicht.

Ein Aufpressen des Kunststoffinlays oder des Kunststoffträgers kann nicht erfolgen, da dadurch die empfindlichen Schäumwerkzeugunterteile zerkratzt oder beschädigt werden, wodurch diese unbrauchbar werden.

Wie bereits dargestellt wurde, werden Bauteile aus Kunststoffträger und damit befestigtem Schaum kaschiert. Je nach Kosten und haptischen und optischen Eigenschaften kann dies mittels einer Folie, einer gespannten Kunststoffhaut oder Leder erfolgen. Jedes dieser Kaschiermaterialien kann eine unterschiedliche Dicke aufweisen, welche dazu führt, dass für unterschiedliche Kaschiermaterialien unterschiedliche Schäumformen verwendet werden müssen.

Aufgabe der Erfindung ist es, den Stand der Technik zu verbessern.

Die Aufgabe wird gelöst durch das Verfahren nach Anspruch 1.

Eine Abdichtschale zum Teilbegrenzen und zum Abdichten einer Kavität, mit einer Schaumformseite und einer Werkzeugträgerseite, ist aus einem Material gefertigt ist, welches bei einem Schließen der Kavität komprimiert.

Somit kann eine Schäumform bereitgestellt werden, bei der sich ein Kunststoffträger oder ein Kunststoffinlay etwas in die Abdichtschale eindrückt, ohne diese mechanisch oder abrasiv zu verletzen.

Es kann mithin eine umlaufende, geschlossene Kontur geschaffen werden, durch die ein Überschäumen nicht mehr erfolgt. Somit kann eine abgedichtete Kavität bereitgestellt werden.

Folgendes Begriffliche sei erläutert:
Eine "Abdichtschale" bildet eine flächige, dreidimensionale Begrenzung für einen in die Kavität eingebrachten Schaum. Die Abdichtschale wird regelmäßig in einem Schäumwerkzeug befestigt. Das Verwenden der Abdichtschale ist dahingehend vorteilhaft, dass die Abdichtschale einfach herstellbar ist und bei Beschädigungen schnell und kostengünstig ausgetauscht werden kann.

Die Abdichtschale kann schaumabweisende Eigenschaften ausbilden, sodass ein Verwenden von Trennmitteln bei einer bevorzugten Ausführungsform entfällt.

Das grundsätzliche Herstellen, Verwenden der Abdichtschale in einem Schaumwerkzeug und die trennmittelabweisenden Herstellungsmerkmale können der WO 2010 13 93 07 A1 entnommen werden.

Das "Teilbegrenzen" bezieht sich auf das Ausbreiten eines in die Kavität eingebrachten Schaumes, sodass die Form der Abdichtschale durch den eingebrachten expandierenden Schaum nachgebildet wird.

Unter "Abdichten einer Kavität" ist insbesondere zu verstehen, dass ein Überschäumen des Schaums an der Kontaktkontur unterbleibt oder stark vermindert ist.

Eine "Kavität" ist ein Hohlraum, welcher durch einen eingebrachten Schaum ausgefüllt wird und dem Schaum die Form der Kavität selbst aufprägt.

Die "Schaumformseite" der Abdichtschale ist der Bereich der Abdichtschale, welcher mit dem expandierenden Schaum in Kontakt treten kann.

Die "Werkzeugträgerseite" der Abdichtschale ist der Teil der Abdichtschale, welcher mit dem Schaumwerkzeug fixierend in Kontakt steht.

Das "komprimierbare Material" ist so ausgelegt, dass beispielsweise beim Aufpressen eines Kunststoffträgers die Fertigungstoleranz des Kunststoffträgers durch das Komprimieren des Materials kompensiert wird.

Die Auswahl des Materials und des notwendigen Druckes zum Herstellen der abgedichteten Kavität wird insbesondere dadurch bestimmt, dass unterschiedliche Materialien mit unterschiedlichen Dicken mit den maximal zulässigen Toleranzabweichungen des Kunststoffträgers unter Druck beaufschlagt werden, sodass bei dem verwendeten Schaum ein Überschäumen nicht erfolgt. Somit erfolgt eine Auswahl des Materials, der Materialdicke und des Drucks im Wesentlichem empirisch.

Um dem Schaumformteil eine definierte Struktur aufzuprägen, kann die Abdichtschale schaumformseitig eine Narbung, eine glatte oder eine polierte Oberfläche aufweisen.

Unter einer "Narbung" ist eine Oberfläche zu verstehen, der eine Kontur aufgeprägt ist, um beispielsweise eine lederartige Struktur nachzuahmen. Eine genarbte Oberfläche kann somit eine hohe haptische Qualität des Formschäumteils vermitteln.

In einer weiteren Ausprägungsform kann die Abdichtschale mittels eines Spritzgussverfahrens oder mittels eines Tiefziehverfahrens hergestellt werden. Somit können Abdichtschalen in großer Stückzahl bei gleichbleibender Qualität hergestellt werden.

Dabei werden bevorzugt Abdichtschalen gefertigt, die eine auf ein hundertstel Millimeter wiederholgenaue Dicke aufweisen.

Zudem kann eine genarbte Oberfläche bereits durch das Herstellverfahren der Abdichtschale hergestellt werden und muss der Schäumform nicht separat, beispielsweise durch Fotoätzen, aufgeprägt werden.

Um ein optimales Material für die Abdichtschale bereitzustellen, kann die Abdichtschale aus einem Material gefertigt sein, welches ein Polyolefin, insbesondere ein Polyethylen, oder ein thermoplastisches Elastomer aufweist.

Dabei sind Polyolefine Polymere, welche aus Alkenen, wie Ethylen, Propylen, 1-Buthen oder Isobuthen durch Polymerisation hergestellt werden. Polyolefine werden auch als Polyalkene bezeichnet. Polyolefine umfassen gesättigte Kohlenwasserstoffe und bilden teilkristalline Thermoplaste, welche sich insbesondere für das Spritzgießverfahren eignen. Sie zeichnen sich durch eine gute chemische Beständigkeit und elektrische Isoliereigenschaften aus.

Polyethylen" ist ein durch Polymerisation von Ethylen [CH₂=CH₂] hergestellter thermoplastischer Kunststoff mit der vereinfachten Ketten-Strukturformel [-H₂C-CH₂-]ₙ.

Thermoplastische Elastomere (TPE) sind Kunststoffe, welche sich bei Raumtemperatur vergleichbar den klassischen Elastomeren verhalten, sich jedoch unter Wärmezufuhr plastisch verformen lassen und somit ein thermoplastisches Verhalten zeigen. Somit kann insbesondere durch ein definiertes Temperieren das Komprimierverhalten der Abdichtschale beeinflusst werden.

Thermoplastische Elastomere sind Werkstoffe, bei denen elastische Polymerketten im thermoplastischen Material eingebunden sind. Sie lassen sich in einem rein physikalischen Prozess in Kombination von hohen Scherkräften, Wärmeeinwirkung und anschließender Abkühlung verarbeiten. Obwohl keine chemische Vernetzung durch eine zeit- und temperaturaufwendige Vulkanisation, wie bei den Elastomeren, notwendig ist, haben die hergestellten Abdichtschalen aufgrund ihrer besonderen Molekularstruktur gummielastische Eigenschaften.

Thermoplastische Elastomere haben in Teilbereichen physikalische Vernetzungspunkte, welche sich bei Wärme auflösen, ohne dass sich die Makromoleküle zersetzen. Aus diesem Grund lassen diese sich besser verarbeiten als "normale Elastomere". Zu den thermoplastischen Elastomeren gehören sowohl die Blockcopolymere als auch Elastomerlegierungen. Blockcopolymere besitzen innerhalb eines Moleküls Hart- und Weichsegmente. Der Kunststoff besteht aus einer Molekülsorte, in der beide Eigenschaften verteilt sind.

Elastomerlegierungen gelten als Polyblends, also Zusammenmischungen von fertigen Polymeren. Der Kunststoff kann also aus mehreren Molekülsorten bestehen. Durch unterschiedliche Mischungsverhältnisse und Zuschlagmittel erhält man maßgeschneiderte Werkstoffe. Beispiele hierfür sind Polyolefin-Elastomer aus Polypropylen und Naturgummi, welche je nach Mengenzusammensetzung unterschiedliche Härtebereiche abdecken. Zu den thermoplastischen Elastomeren gehören TPE-O (thermoplastische Elastomere auf Olefinbasis), TPE-V (vernetzte thermoplastische Elastomere auf Olefinbasis), TPE-U (thermoplastische Elastomere auf Urethanbasis), TPE-E (thermoplastische Polyestherelastomere / thermoplastische Copolyesther), TPE-S (Styrol-Blockcopolymere (SBS, SEBS, SEPS, FEEPS und NBS) wie beispielsweise Septon der Firma Kuraray) und TPE-A (thermoplastische Copolyamide).

Damit dem Schaum eine schützende Oberfläche aufgeprägt werden kann, ist die Abdichtschale zumindest teilweise mit einem Lack bedeckt. Lacke der hier verwendeten Art sind insbesondere Lacke auf Basis von Polyurethan.

In einer weiteren Ausführungsform kann ein Träger, insbesondere ein Kunststoffträger, oder eine Werkzeughälfte der Abdichtschale aufgepresst sein, sodass sich eine schaumdichte Kontaktkontur ausbildet.

Somit kann eine Kavität für einen Schaum bereitgestellt werden, welcher auf der einen Seite die Form der Abdichtschale ausbildet und auf der anderen Seite einen festen Kontakt mit dem Träger ausbildet oder die Form der Werkzeughälfte dem Schaum aufprägt. Insbesondere ist ein Überschäumen über die Kontaktkontur unterbunden.

Um die Vorteile der Abdichtschale auch einer zweiten Werkzeughälfte bereitzustellen, kann die (zweite) Werkzeughälfte eine (zweite) Abdichtschale aufweisen, insbesondere handelt es sich dabei um eine Abdichtschale, wie sie zuvor beschrieben wurde.

Insbesondere kann die zweite Abdichtschale eine andere Materialzusammensetzung aufweisen als eine erste Abdichtschale, sodass sich beispielsweise eine härtere Abdichtschale mit einer weicheren Abdichtschale zu einer abgedichteten Kavität zusammenfügen lassen. Dabei sei darauf hingewiesen, dass je eine Abdichtschale in einer Werkzeughälfte des Schäumwerkzeuges eingebracht sein kann.

Da ein Entlüften über die Kontaktkontur nicht oder nur schwer erfolgen soll, kann meist wenigstens eine der Abdichtschalen, der Träger oder eine Werkzeughälfte einen Entlüftungsbereich in einem Nichtsichtbereich aufweisen. Die genaue Anbringung des Entlüftungsbereiches wird regelmäßig empirisch ermittelt.

Um überschäumtes Material abzufangen, kann eine der Abdichtschalen, der Träger oder die Werkzeughälfte einen Entlüftungstopf aufweisen. Somit kann gewährleistet werden, dass überschäumtes Material der Kavität in einem Entlüftungstopf definiert platziert ist.

Weiterhin kann dabei der Entlüftungstopf eine Dichtlippe aufweisen, sodass der Entlüftungsbereich und somit der Entlüftungstopf hermetisch schaumdicht gegenüber der Umgebung abgeschlossen ist.

In einer weiteren Ausführungsform kann der Entlüftungsbereich semipermeabel ausgestaltet sein, sodass ein in der Kavität expandierender Schaum verbleibt und Luft die Kavität über den semipermeablen Entlüftungsbereich verlässt.

Somit können Lufteinschlüsse im Schaum verringert werden. Weiterhin wird die Luft in der Kavität nicht übermäßig komprimiert, sodass eine höhere Qualität im Bezug auf die Schaumformteile gewährleistet werden kann.

Um eine möglichst effektive und einfach realisierbare Möglichkeit des semipermeablen Entlüftungsbereichs umzusetzen, kann der semipermeable Entlüftungsbereich durch eine dampfdiffusionsoffene Membran oder durch Mikrobohrungen gebildet sein.

Die "dampfdiffusionsoffene Membran" kann dabei insbesondere als Gitter ausgestaltet sein, welches in regelmäßigen oder unregelmäßigen Abständen kleine Löcher aufweist. Somit kann dies beispielsweise ein PE-Gitter sein, welches Löcher im Mikro- oder Nanobereich aufweist.

Die "Mikrobohrungen" können insbesondere schon beim Herstellungsprozess der Abdichtschale geschaffen werden oder durch Bohrungen in die gefertigte Abdichtschale bereitgestellt werden. Sowohl die Mikrobohrungen als auch die Gitteröffnungen können kleiner als 0,05 mm, insbesondere kleiner 0,01 mm oder kleiner 0,003 mm, gefertigt sein.

Die Abdichtschale ist werkzeugträgerseitig in einem Schaumwerkzeug fixiert, sodass ein Schaumwerkzeug mit einer Abdichtschale ausgebildet ist.

Somit kann eine Vorrichtung bereitgestellt werden, mit der Schaumformteile, insbesondere aus Träger und angefügtem Schaum, hergestellt werden können.

Um eine möglichst einfache und effektive Halterung der Abdichtschale in einem Schäumwerkzeug zu gewährleisten, kann das Fixieren mittels eines Vakuums oder mechanisch erfolgen.

Beim "mechanischen Fixieren" sind sowohl lösbar feste als auch feste Verbindungen umsetzbar. Die Möglichkeiten der Befestigung sind nicht auf Schrauben, Kleben oder Klemmen beschränkt.

Bei dem "Fixieren mittels eines Vakuums" kann eine formschlüssige Aufnahme für die Abdichtschale verwendet werden, wobei in der Aufnahme mehrere Löcher angeordnet sind. Hinter diesen Löchern wird ein Vakuum erzeugt, sodass die Abdichtschale in die Aufnahme gepresst wird.

In einem weiteren, nicht erfindungsgemäßen Aspekt wird die Aufgabe durch eine Vorrichtung zur Herstellung von Formschaumteilen adressiert, wobei eine zuvor beschriebe Abdichtschale eingebracht ist. Somit kann ein Formschäumteilwerkzeug bereitgestellt werden, welches bereits beschriebene Vorteile umsetzt.

In einem weiteren Aspekt der Offenbarung wird die Aufgabe adressiert durch eine Verwendung einer zuvor beschriebenen Abdichtschale zum Ausgleichen von Stärkeunterschieden von geschäumten Formteilen, welche beispielsweise lederkaschiert und folienkaschiert sind. Somit können Dickeunterschiede durch die Abdichtschale ausgeglichen werden.

Zudem sind die bisher verwendeten "Pure Liner" nicht mehr notwendig. Bei dem "Pure Liner" handelt es sich um eine zusätzliche Schicht, die bisher den Dickenausgleich realisiert hat. Nachteilig dabei war, dass der Pure Liner häufig im Bauteil verblieb und das Kaschieren um den Pure Liner herum erfolgte. Derartige Lösungen sind vorliegend nicht mehr notwendig und es kann eine hohe Produktionsrate unter hohen Qualitätsanforderungen bereitgestellt werden.

In einem weiteren Aspekt wird die Aufgabe gelöst durch eine Schäumform mit einem semipermeablen Entlüftungsbereich.

Dadurch können allgemein Schäumformen mit einer effektiven Entlüftungseinrichtung bereitgestellt werden. Die Vorteile entsprechen dem zuvor beschriebenen Vorteil bei semipermeablen Entlüftungsbereichen bei der zuvor beschriebenen Abdichtschale, wobei die Anwendung nicht auf Abdichtschalen begrenzt ist, sondern in allen Schäumwerkzeugen verwendbar ist.

Im Bezug auf eine diesbezügliche Ausführungsform kann der semipermeable Entlüftungsbereich durch eine Membran oder durch Mikrobohrungen gebildet werden. Hierzu wird ebenfalls auf die zuvor beschriebenen Eigenschaften und Vorteile verwiesen.

Weiterhin kann die die Aufgabe gelöst werden durch ein Formschäumwerkzeug, welches eine zuvor beschriebene Formschäumform aufweist. Somit können Formschäumwerkzeuge von hoher Qualität und Güte bereitgestellt werden.

Die Aufgabe wird gelöst durch ein Verfahren zum Herstellen eines Schäumformteils gemäß Anspruchs 1, wobei eine zuvor beschriebene Abdichtschale verwendet wird und zum Bilden einer abgedichteten Kavität ein Gegenstück der Abdichtschale auf die Abdichtschale aufgepresst und vor oder nach dem Aufpressen ein Schaum in die Kavität eingebracht wird, sodass die abgedichtete Kavität sich ausbildet und der in der Kavität eingebrachter Schaum lediglich innerhalb der Kavität expandiert.

Das Gegenstück kann dabei durch eine weitere Abdichtschale gebildet werden.

Sowohl die Materialdicke als auch die Materialauswahl als auch die nötigen Kräfte zum Ausbilden der abgedichteten Kavität werden empirisch bestimmt.

Somit lassen sich Schaumformen und Schaumformteile von hoher Qualität und Güte bereitstellen.

Die Aufgabe wird gelöst durch ein Schaumformformteil, welches nach dem zuvor beschriebenen Verfahren hergestellt wird.

Im Weiteren wird die Erfindung anhand von Ausführungsbeispielen näher erläutert.

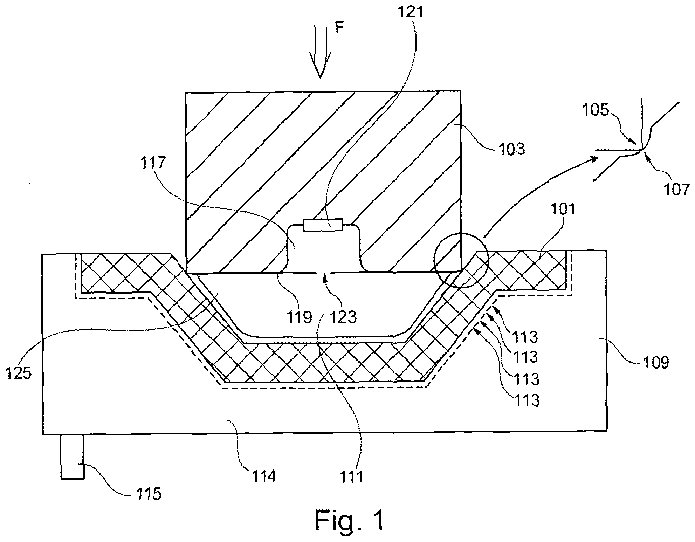

Dabei zeigt die
Figur 1 in einer schematischen Schnittzeichnung ein Schäumwerkzeug mit einem eingebrachten Kunststoffträger.

Ein Werkzeug zum Herstellen eines Formschäumteils wird dadurch bereitgestellt, dass in eine Werkzeugträgerhälfte 109 eine Abdichtschale 101 eingelegt ist. Die Aufnahme der Werkzeugträgerhälfte 109 weist Vakuumbohrungen 113 auf. Der Werkzeugträger 109 weist einen Hohlraum 114 auf. An diesen Hohlraum ist eine Vakuumpumpe 115 angeflanscht. Über das durch die Vakuumpumpe 115 erzeugte Vakuum im Werkzeughalterhohlraum 114 wird über die Vakuumbohrungen 113 die Abdichtschale 101 in der Werkzeugträgerhälfte 109 fixiert.

Das herzustellende Formschäumteil weist einen Kunststoffträger 103 auf. Der Kunststoffträger 103 weist kavitätsseitig eine Entlüftungsbohrung 123 auf, welche von der Kavität 111 in den Entlüftungstopf 117 führt. Der Entlüftungstopf 117 ist über eine Dichtlippe 119 fest mit dem Kunststoffträger 103 verbunden. Zudem weist der Entlüftungstopf 117 eine semipermeable Membran 121 auf. Diese semipermeable Membran 121 besteht aus GoreTex®. Somit kann Luft von der Kavität 111 zum Entlüftungstopf 117 transportiert und über die Membran 121 abgeführt werden.

Bevor das Formschäumteil hergestellt werden kann, wird kavitätsseitig ein Lack 125 auf Polyurethanbasis auf die Abdichtschale 101 aufgetragen. In die Kavität 111 wird ein Schaum eingebracht, welcher mit der Zeit expandiert. Direkt nach dem Einbringen des Schaumes wird der Kunststoffträger mit einer definierten Kraft F in Pfeilrichtung in die Abdichtschale 101 gepresst.

Dabei bildet sich an den Kontaktstellen 105, 107 eine Kontaktkontur aus. Dadurch, dass die Kunststoffträgerkante 105 die Kontaktkante der Abdichtschale 107 elastisch deformiert, wird eine geschlossene und schaumdichte Kavität 111 bereitgestellt. In dieser Kavität 111 expandiert der zuvor eingebrachte Schaum.

Da ein Überschäumen über die Kontaktkontur nicht möglich ist, gelangt überschüssiger Schaum in den Entlüftungstopf 117. Zudem wird über die Entlüftungsbohrung 123 und die Membran 121 Luft aus der Kavität 111 entfernt.

Beim Aufschäumen des zuvor eingebrachten Schaumes wird die Form der Kavität 111 dem Schaum aufgeprägt. Dabei bildet der Schaum sowohl mit dem Lack 125 als auch mit dem Kunststoffträger 103 eine feste Verbindung aus.

Nach Abschluss des Schäumens wird das Formschäumteil bestehend aus Kunststoffträger 103, ausgeschäumtem Schaum und beschichtetem Lack 125 entformt.

Durch die Materialauswahl der Abdichtschale erfolgt dieses Ausformen rückstandsfrei. Danach erfolgt ein weiteres Herstellen eines Formschäumteils. Alternativ wird die geschlossene Kavität 111 gebildet und der Schaum danacheingebracht.

Damit ein Formschäumteil mit unterschiedlich dicken Materialien kaschiert werden kann, wird die Dicke der Abdichtschale 101 derart ausgewählt, dass die Dickenunterschiede der Kaschiermaterialien ausgeglichen sind.

Die vorliegende Abdichtschale 101 ist aus einer Mischung von TPE-O mit Naturgummi (NR) hergestellt. Der Naturgummianteil variiert dabei zwischen 15 % und 40 %. Um die Kraft F festzulegen, mit welcher der Kunststoffträger 103 auf die Abdichtschale 101 gepresst wird, werden zwei Kunststoffträger 103 mit den beiden Extremwerten des Tolleranzbereichs ausgewählt. Es wird jeweils die Kraft ermittelt, welche nötig ist, um eine geschlossene Kontur zu erhalten, wobei ein Überschäumen nicht stattfindet. Der höhere Wert für F wird im Weiteren verwendet.

In einer zweiten Alternativen (nicht dargestellt) weist der Entlüftungstopf 117 keine Membran auf. Jedoch sind in der Abdichtschale 101 Öffnungen mit einem Durchmesser von 0,01 mm angeordnet. Somit kann die Luft aus der geschlossenen Kavität 111 über diese Löcher entweichen.

In einer dritten Alternative ist in der Abdichtschale 101 eine semipermeable Membran 121 angeordnet. In diesem Fall ist die Funktionsweise wie zuvor beschrieben, wobei Luft über die in der Abdichtschale 101 angeordneten Membran erfolgt.

In einer vierten Alternative wird die Kavität 111 nicht über einen Kunststoffträger 103 geschlossen, sondern über eine weitere (zweite) Werkzeughälfte, in welcher eine zweite Abdichtschale angeordnet ist. Somit werden Formteile geschaffen, welche die Kavität nachbilden. Dabei ist zu beachten, dass ebenfalls eine geschlossene Kontur gewährleistet ist, über die ein Überschäumen nicht erfolgt, jedoch ein Ableiten von Luft aus der Kavität über einen Entlüftungsbereich mit Membran oder Mikrobohrungen erfolgt.

Mit der vorliegenden Abdichtschale 101 werden auch Sprühhäute hergestellt. Die dafür verwendeten Abdichtschalen 101 weisen eine Positivnarbung auf, welche den Abdichtschalen 101 beim Spritzgießen zum Zeitpunkt der Herstellung bereits aufgeprägt wurden. Entsprechend hat die dann daraus erzeugte Sprühhaut die gewünschte Oberfläche.

Die Schale wird in einen Werkzeugträger wie zuvor beschrieben eingebracht. Beim Herstellungsprozess werden wiederum keine Trennmittel benötigt, da die Abdichtschale bereits eine trennende Wirkung materialimmanent aufweist.

Um die Sprühhäute herzustellen, werden zwei Komponenten in einer Mischdüse vermischt und mittels Roboter der Abdichtschale aufgesprüht. Somit können Sprühhäute gewünschter Dicken hergestellt werden.

In einer weiteren Alternative werden die vorliegenden Abdichtschalen auch beim Herstellen von Epoxydharzbauteilen, wie beispielsweise Ski, Surf- oder Schiffsteilen, verwendet. Entsprechend werden in die Abdichtschale das Epoxydharz und die entsprechenden Matrizen wie Glasfasermatten eingelegt.

### Bezugszeichenliste:

- 101: Abdichtschale
- 103: Kunststoffträger
- 105: Kunststoffträgerkante
- 107: Kontaktkante der Abdichtschale
- 109: Werkzeugträgerhälfte
- 111: Geschlossene Kavität
- 113: Vakuumbohrungen
- 114: Werkzeughalterhohlraum
- 115: Vakuumpumpe
- 117: Entlüftungstropf
- 119: Dichtlippe
- 121: Membran
- 123: Entlüftungsbohrung
- 125: Lackschicht

## Patentansprüche

1. Verfahren zum Herstellen eines Schäumformteils, wobei zunächst eine Abdichtschale (101) zum Teilbegrenzen und zum Abdichten einer Kavität (111) hergestellt wird, mit einer Schaumformseite und einer Werkzeugträgerseite, wobei die Abdichtschale (101) aus einem Material gefertigt ist, welches bei einem Schließen der Kavität (111) komprimiert, wobei die Abdichtschale (101) mittels eines Spritzgussverfahrens, hergestellt wird, wobei die Abdichtschale (101) aus einem Material gefertigt ist, welches ein Polyolefin, insbesondere ein Polyethylen, oder ein thermoplastisches Elastomer aufweist, wobei die Abdichtschale (101) schaumformseitig eine Narbung aufweist, und wobei danach diese Abdichtschale (101) verwendet wird zum Bilden einer abgedichteten Kavität (111), indem die Abdichtschale (101) werkzeugträgerseitig in einem Schäumwerkzeug fixiert wird, so dass ein Schäumwerkzeug mit einer Abdichtschale (101) ausgebildet wird, wobei das Fixieren mittels eines flächigen Vakuums erfolgt, sodass die Abdichtschale (101) innerhalb des Schäumwerkzeugs die Kavität (111) bildet abdichtet, sodass die Form der Abdichtschale (101) durch den eingebrachten expandierenden Schaum nachgebildet wird, wobei die Abdichtschale (101) zumindest teilweise mit einem Lack auf Basis von Polyurethan bedeckt wird, wobei ein Gegenstück der Abdichtschale (101) in Form eines Kunststoffträgers (103) auf die Abdichtschale (101) aufgepresst wird, wobei der Kunststoffträger (103) mit einer definierten Kraft F in Pfeilrichtung in die Abdichtschale (101) gepresst wird, wobei sich an den Kontaktstellen eine Kontaktkontur ausbildet, und vor oder nach dem Aufpressen ein Schaum in die Kavität (111) eingebracht wird, so dass sich die abgedichtete Kavität (111) ausbildet und der in die Kavität (111) eingebrachte Schaum lediglich innerhalb der Kavität (111) expandiert, und zwar trennmittelfrei, wobei anschließend das Formschäumteil bestehend aus Kunststoffträger (103), ausgeschäumtem Schaum und beschichtetem Lack entformt wird, wobei durch die Materialauswahl der Abdichtschale (101) erfolgt dieses Ausformen rückstandsfrei und danach ein weiteres Herstellen eines weiteren Formschäumteil erfolgt,
**dadurch gekennzeichnet, dass** die Kunstoffträgerkante (105) die Kontaktkante (107) der Abdichtschale (101) elastisch deformiert und eine schaumdichte Kavität (111) bereitgestellt wird.

## Claims

1. Method of producing a foam-molded part, wherein first a sealing tray (101) for partly limiting and for sealing a cavity (111) is produced, having a foam mold side and a tool carrier side, the sealing tray (101) being made of a material which compresses during a closing of the cavity (111), the sealing tray (101) being produced by means of an injection molding method; the sealing tray (101) being made of a material which contains a polyolefin, in particular a polyethylene, or a thermoplastic elastomer, the sealing tray (101) having a graining on the foam mold side, and this sealing tray (101) being subsequently used for forming a sealed cavity (111) by fixing the sealing tray (101) in a foaming tool on the tool carrier side such that a foaming tool with a sealing tray (101) is formed, fixation taking place by means of an extensive vacuum such that the sealing tray (101) forms and seals the cavity (111) within the foaming tool so that the shape of the sealing tray (101) is reproduced by the introduced expanding foam, the sealing tray (101) being at least partially covered with a lacquer on polyurethane basis, a counterpiece to the sealing tray (101) in the form of a plastic carrier (103) being pressed onto the sealing tray (101), the plastic carrier (103) being pressed into the sealing tray (101) in the direction of the arrow with a defined force F, a contact contour being formed at the points of contact and before or after pressing, a foam being introduced in the cavity (111) such that the sealed cavity (111) is formed and the foam introduced in the cavity (111) expands merely inside the cavity (111) without any release agent, the foam-molded part consisting of plastic carrier (103), foam which has completely foamed and coated lacquer being demolded subsequently, this demolding taking place without residue due to the selection of material of the sealing tray (101); manufacturing of an additional foam-molded part taking place subsequently;
**characterized in that**
the plastic carrier edge (105) elastically deforms the contact edge (107) of the sealing tray (101) and a foam-tight cavity (111) is provided.

## Revendications

1. Procédé, destiné à fabriquer un élément alvéolaire moulé, lors duquel on fabrique d'abord une coque d'étanchéité (101) pour délimiter partiellement et pour assurer l'étanchéité d'une cavité (111), pourvue d'une face moulée alvéolaire et d'une face porteuse d'outil, la coque d'étanchéité (101) étant fabriquée en une matière qui se comprime lors d'une fermeture de la cavité (111), la coque d'étanchéité (101) étant fabriquée au moyen d'un procédé de moulage par injection, la coque d'étanchéité (101) étant fabriquée en une matière, laquelle comporte une polyoléfine, notamment un polyéthylène ou un élastomère thermoplastique, sur la face moussée alvéolaire, la coque d'étanchéité (101) présentant un grainage et ladite coque d'étanchéité (101) étant utilisée par la suite pour créer une cavité (111) étanchéifiée, en ce qu'on fixe par la face porteuse d'outil la coque d'étanchéité (101) dans un outil de moussage, de sorte à créer un outil de moussage avec une coque d'étanchéité (101), la fixation s'effectuant au moyen d'un vide surfacique, de sorte que la coque d'étanchéité (101) forme la cavité (111) à l'intérieur de l'outil de moussage, et assure son étanchéité, de sorte que la forme de la coque d'étanchéité (101) soit reproduite par la mousse expansée introduite, lors duquel on recouvre au moins partiellement la coque d'étanchéité (101) avec un vernis à base de polyuréthane, lors duquel on presse une pièce antagoniste de la coque d'étanchéité (101) sous la forme d'un support en matière plastique (103) sur la coque d'étanchéité (101), lors duquel on presse le support en matière plastique (103) avec une force F définie en direction de la flèche dans la coque d'étanchéité (101), sur les points de contact se formant un contour de contact et lors duquel, avant ou après le pressage, on introduit une mousse dans la cavité (111) de sorte que la cavité (111) étanchéifiée se créé et que la mousse introduite dans la cavité (111) s'expanse uniquement à l'intérieur de la cavité (111), à savoir sans agent séparateur, lors duquel on démoule par la suite l'élément alvéolaire moulé constituée du support en matière plastique (103), de la mousse expansée et du vernis revêtu, grâce au choix de la matière de la coque d'étanchéité (101), ledit démoulage s'effectuant sans résidu et une fabrication réitérée d'un autre élément alvéolaire moulé s'effectuant par la suite,
**caractérisé en ce que**
l'arête de support en matière plastique (105) déforme élastiquement l'arête de contact (107) de la coque d'étanchéité (101) et **en ce qu'**une cavité (111) étanche à la mousse est mise à disposition.
